Europäisches Patentamt

European Patent Office

Office européen des brevets

(11) Veröffentlichungsnummer: **0 414 933 A1**

## (12) EUROPÄISCHE PATENTANMELDUNG

(21) Anmeldenummer: 89115923.8

(22) Anmeldetag: 29.08.89

(51) Int. Cl.5: **F16C 3/18**, H02K 7/075, F04B 9/04

(43) Veröffentlichungstag der Anmeldung:
06.03.91 Patentblatt 91/10

(84) Benannte Vertragsstaaten:
**DE ES FR GB**

(71) Anmelder: **Siemens Aktiengesellschaft**
**Wittelsbacherplatz 2**
**W-8000 München 2(DE)**

(72) Erfinder: **Deynet, Rolf, Dipl.-Ing.**
**Franz-Stadelmayer-Strasse 9**
**W-8700 Würzburg(DE)**

(54) Welle, insbesondere Rotorwelle eines Elektromotors zum Antrieb einer Pumpe, mit anschliessendem Wellenstumpf in Form eines Exzenterzapfens.

(57) Um an einer Rotorwelle (2) mit einem Wellenstumpf in Form eines Exzenterzapfens (21) auf fertigungstechnisch einfache Weise im radial absetzenden Schulter-Übergangsbereich zum Exzenterzapfen (21) eine wirksame Fädelfase zum Aufziehen z.B. der Rotorbleche oder der Rotorlager auf die Rotorwelle (2) anbringen zu können, ist erfindungsgemäß eine exzentrisch zur Achse (24) der Rotorwelle (2) verlagerte Fädelfase (23) vorgesehen, die beim Abdrehen des Exzenterzapfens (21) in einem Arbeitsgang mit dem dafür vorgesehenen Drehbearbeitungs-Werkzeug herstellbar ist.

FIG 1

FIG 2

EP 0 414 933 A1

# WELLE, INSBESONDERE ROTORWELLE EINES ELEKTROMOTORS ZUM ANTRIEB EINER PUMPE, MIT ANSCHLIESSENDEM WELLENSTUMPF IN FORM EINES EXZENTERZAPFENS

Die Erfindung bezieht sich auf eine Welle, insbesondere Rotorwelle eines Elektromotors zum Antrieb einer Pumpe, mit anschließendem Wellenstumpf in Form eines Exzenterzapfens gemäß Oberbegriff des Anspruchs 1; eine derartige Welle ist für einen Elektromotor zum Antrieb einer Hydraulikpumpe für ein Antiblockier-Bremssystem in einem Kraftfahrzeug durch eine offenkundige Vorbenutzung bekannt.

Bei dem durch die offenkundige Vorbenutzung bekannten Elektromotor für eine Hydraulikpumpe ist eine Fädelfase zur Montageerleichterung für die auf die Rotorwelle z.B. aufzuschiebenden Blechlamellen des Rotorblechpaketes oder der Rotorlager zentrisch zur Achse der Rotorwelle als über den gesamten Umfang symmetrische Anschrägung mit einer sehr kleinen Durchmesserdifferenz nach dem Einstech-Schleifverfahren angebracht. Eine derartige Einfädelhilfe könnte nur durch Erhöhung der Durchmesserdifferenz verbessert werden, was jedoch dann eine ansonsten nicht erforderliche Vergrößerung der Rotorwelle bedingt.

Gemäß Aufgabe der vorliegenden Erfindung soll bei vereinfachter Fertigung gleichzeitig eine bessere, insbesondere zum Einsatz einer Automatenfertigung vorteilhafte, Einfädelhilfe für auf die Rotorwelle aufzuschiebende Bauteile, wie z.B. Rotorblechpaketlamellen und Rotorlager geschaffen werden.

Die Lösung der gestellten Aufgabe gelingt bei einer Welle der eingangs genannten Art erfindungsgemäß durch die Lehre des Anspruchs 1; vorteilhafte Ausgestaltungen der Erfindung sind jeweils Gegenstand der Unteransprüche.

Bei der erfindungsgemäßen Konstruktion einer Welle mit angeformtem Wellenstumpf in Form eines Exzenterzapfens kann bei allein hinsichtlich elektrischer bzw. mechanischer Dimensionierung des Elektromotors ausgelegtem Rotorwellendurchmesser und bei maximalem Exzenterhub eine zur bekannten Lösung wesentlich vergrößerte und die Montage von auf die Rotorwelle aufzuschiebender weiterer Bauteile erleichternde Fädelfase mit einfachen fertigungstechnischen Mitteln durch Drehbearbeitung, insbesondere unter Mitbenutzung des für das Abdrehen des Wellenstumpfes vorgesehenen Werkzeuge, hergestellt werden, wobei sich die Fädelfase zweckmäßigerweise sichelartig mit einem einkerbungslosen Übergang zu dem Exzenterzapfen über einen Umfangswinkel größer als 180° erstreckt.

Die Erfindung wird im folgenden anhand eines schematisch dargestellten Ausführungsbeispiels näher erläutert; darin zeigen:

FIG 1 in axialer Draufsicht eine Rotorwelle eines Elektromotors mit einem anschließenden Wellenstumpf in Form eines Exzenterzapfens und im Übergangsbereich zwischen Rotorwelle und Exzenterzapfen an die Rotorwelle angebrachter, zur Rotorwelle exzentrischer Fädelfase,
FIG 2 die stirnseitige Draufsicht auf den Exzenterzapfen und die Rotorwelle gemäß FIG 1,
FIG 3 in axialem Teilschnitt die bekannte Anordnung eines Elektromotors mit an der Rotorwelle im Übergangsbereich zum Exzenterzapfen angebrachter zentrischer Fädelfase.

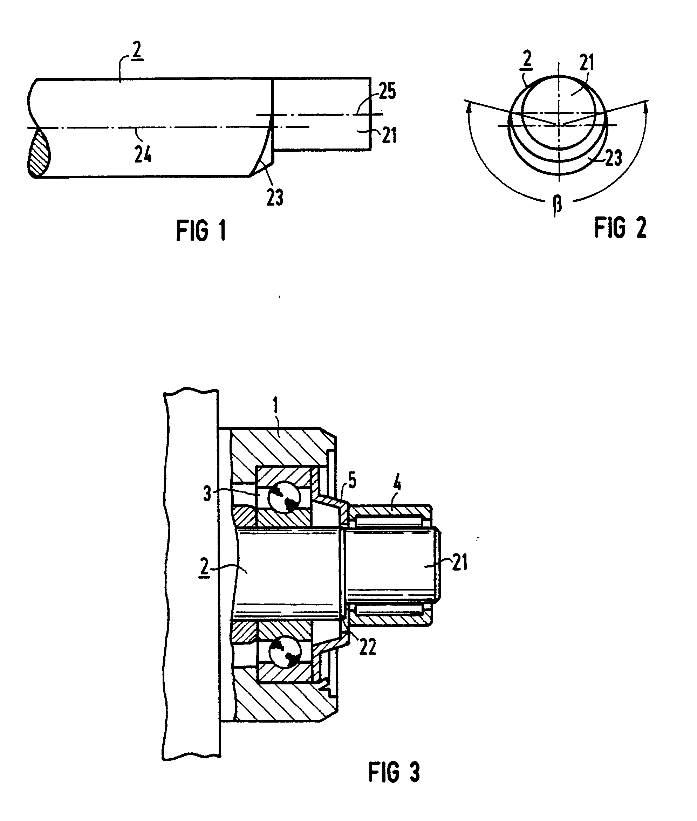

Zum allgemeinen Verständnis wird zunächst auf die bekannte Lösung gemäß FIG 3 verwiesen, die das rechte Ende eines Elektromotors mit einer in einem Lagerflansch 1 über ein Kugellager 3 gelagerten Rotorwelle 2 mit stirnseitigen, zur Achse 24 der Rotorwelle 2 exzentrischen Wellenstumpf in Form eines Exzenterzapfens 21 mit einer Achse 25 zeigt. In den Lagerflansch 1 ist von dessen rechter offener Stirnseite her eine Lagerbohrung mit einer Anlageschulter als Lagersitz für den Außenlagerring des Kugellagers 3 eingearbeitet. Zur Lagesicherung des Kugellagers 3 in der anderen axialen Richtung ist gegen die rechte äußere Stirnseite des Außenlagerringes des Kugellagers 6 eine Abstützscheibe 5 gegengedrückt und an ihrem Außenumfang - wie im unteren Teil des Schnittbildes nach FIG 3 angedeutet - durch Verstemmen des Lagerflansches 1 im stirnseitigen Endbereich der Lagerbohrung festgelegt. Die Abstützscheibe 5 weist an ihrem rechten Ende einen axial abgesetzten Anlagebund auf, gegen den mit seiner linken Stirnseite ein auf dem Exzenterzapfen 21 aufgeschobenes Nadellager anliegt. Über das Nadellager 4 werden in hier nicht dargestellter Weise Pumpenstößel einer an den Lagerflansch 1 des Elektromotors angeflanschten Hydraulikpumpe eines Antiblockier-Bremssystems für ein Kraftfahrzeug angetrieben.

Der Hub für die Pumpenstößel der Hydraulikpumpe wird durch den exzentrischen Versatz zwischen der Achse 24 der Rotorwelle 2 einerseits und der Achse 25 des Exzenterzapfens 21 andererseits und dementsprechend durch den maximalen radialen Schulterabsatz im Übergangsbereich zwischen der Rotorwelle 2 und dem Exzenterzapfen 21 bestimmt; die Durchmessermaße der Rotorwelle 2 und des Exzenterzapfens 21 sind aufgrund der elektrischen Auslegung bzw. mechanischen Festigkeit des gesamten Aggregats bestimmt.

Als Montagehilfe für auf die Rotorwelle 2 aufzuschiebenden Bauteile, wie z.B. ein Kugellager 3, ist bei der bekannten Konstruktion gemäß FIG 3 im Übergangsbereich zwischen der Rotorwelle 2 und dem Exzenterzapfen 21 an die Rotorwelle 2 eine zu deren Achse zentrische und somit über den Umfang symmetrische Fädelfase 22 angeschliffen. Diese Fädelfase 22 kann nur eine geringe Einfädelhilfe bei der Montage geben, wenn man nicht den Durchmesserunterschied im Bereich des minimalen Schulterabsatzes zwischen der Rotorwelle 2 und dem Exzenterzapfen 21 über das ansonsten hinaus erforderliche Maß vergrößern will und kann nur im aufwendigen Einstechschleifverfahren hergestellt werden.

Gemäß FIG 1,2 kann bei einfacher Fertigungstechnik und ohne ansonsten nicht notwendige Vergrößerung des Durchmessers der Rotorwelle 2 im Verhältnis zum Durchmesser des Exzenterzapfens 21 eine wirksame Verbesserung der Einfädelhilfe durch eine exzentrisch zur Achse 24 der Rotorwelle 2 im Schulter-Übergangsbereich mit dem größeren radialen Absatz verlagerte Fädelfase 23 erreicht werden, die sich zweckmäßigerweise gemäß FIG 2 sichelförmig über einen Umfangswinkel $\beta$ größer als 180° und kleiner als 360° erstreckt und somit im Vergleich zur bekannten Lösung gemäß FIG 3 trotz gleicher Durchmessermaße der Rotorwelle 2 und des Exzenterzapfens 1 und bei gleichem exzentrischen Versatz der Achse 24 der Rotorwelle 2 gegenüber der Achse 25 des Exzenterzapfens 21 einen wesentlich vergrößerten Einführtrichter als Fädelhilfe, z.B. beim Aufschieben des Kugellagers 3 mit Hilfe eines Automaten, bei der Montage des Elektromotors ergibt.

Außer der verbesserten Montagehilfe ist eine Fertigungsvereinfachung dadurch möglich, daß nach einer Ausgestaltung der Erfindung die Fädelfase 23 nicht nach dem ein gesondertes und aufwendiges Bearbeitungswerkzeug erfordernden Einstech-Schleifverfahren, sondern mit dem für die Drehbearbeitung des Exzenterzapfens an sich vorhandenen Dreh-Werkzeug ohne entsprechenden Mehraufwand hergestellt wird. Gleichzeitig ist es möglich, anstelle einer abschnittsweisen Härtung des Exzenterzapfens die Rotorwelle 2 und den Exzenterzapfen 21 prozeßsicher komplett durchzuhärten und die Oberfläche der ansonsten absatzlos ausgeführten nach dem einfachen Durchlauf-Schleifverfahren zu bearbeiten; dementsprechend ist ein vorteilhaftes Verfahren zur Herstellung einer Welle mit erfindungsgemäß vorgesehener Fädelfase durch folgende Verfahrensschritte gekennzeichnet:

a) Die Rotorwelle 2 und der Wellenstumpf werden auf den Durchmesser der Rotorwelle 2 zentrisch zu deren Achse 24 abgedreht.

b) Der Wellenstumpf wird auf den Durchmesser des Exzenterzapfens 21 zentrisch zu dessen Achse 25 abgedreht und gleichzeitig wird die exzentrische Fädelfase 23 mit dem auch für den Exzenterzapfen 21 vorgesehenen Drehbearbeitungswerkzeug angebracht.

c) Die Oberfläche der Rotorwelle 2 wird nach dem Durchlaufschleifverfahren geschliffen.

**Ansprüche**

1. Welle, insbesondere Rotorwelle (2) eines Elektromotors zum Antrieb einer Pumpe, mit anschließendem Wellenstumpf in Form eines Exzenterzapfens (21) und an der Rotorwelle (2) im radial absetzenden Schulter-Übergangsbereich zum Exzenterzapfen (21) vorgesehener Fädelfase (22 bzw.23), **gekennzeichnet** durch eine exzentrisch relativ zur Achse (24) der Rotorwelle (2) in den Schulter-Übergangsbereich mit dem größeren radialen Absatz verlagerte Fädelfase (23).

2. Welle nach Anspruch 1, **gekennzeichnet** durch eine sich über einen Umfangswinkel ($\beta$) von mehr als 180° erstreckende Fädelfase (23).

3. Welle nach Anspruch 1 und/oder 2, **gekennzeichnet** durch einen kontinuierlichen absatzlosen Übergang der Rotorwelle (2) in den Exzenterzapfen (21) in dem der Fädelfase (23) gegenüberliegenden Übergangsbereich.

4. Welle nach einem der Ansprüche 1 bis 3, **dadurch gekennzeichnet**, daß die Rotorwelle (2) mit einer absatzlosen durchlaufgeschliffenen Oberfläche versehen ist.

5. Welle nach einem der Ansprüche 1 bis 4, **gekennzeichnet** durch eine gleich dem Exzenterzapfen (21) drehbearbeitete Fädelfase (23).

6. Verfahren zur Herstellung einer Welle gemäß Anspruch 1, **gekennzeichnet** durch folgende Verfahrensschritte:

a) Die Rotorwelle (2) und der Wellenstumpf werden auf den Durchmesser der Rotorwelle (2) zentrisch zu deren Achse (24) abgedreht.

b) Der Wellenstumpf wird auf den Durchmesser des Exzenterzapfens (21) zentrisch zu dessen Achse (25) abgedreht und gleichzeitig wird die exzentrische Fädelfase (23) mit dem auch für den Exzenterzapfen (21) vorgesehenen Drehbearbeitungswerkzeug angebracht.

c) Die Oberfläche der Rotorwelle (2) wird nach dem Durchlaufschleifverfahren geschliffen.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 814 688 (LUCAS INDUSTRIES) * Seite 2, Figur 1 * --- | 1,4 | F 16 C 3/18 H 02 K 7/075 F 04 B 9/04 |
| A | DE-A-1 528 395 (BORG-WARNER) * Figur 1 * --- | 1 | |
| A | DE-A-2 758 182 (CLAYTON DEWANDRE) * Figur 1 * --- | 1 | |
| A | US-A-2 218 928 (TOWLER) --- | | |
| A | US-A-2 325 804 (SHOEMAKER) ----- | | |

**RECHERCHIERTE SACHGEBIETE (Int. Cl.5)**

F 16 C
H 02 K
F 03 C
F 04 B

Der vorliegende Recherchenbericht wurde für alle Patentansprüche erstellt

| Recherchenort | Abschlußdatum der Recherche | Prüfer |
|---|---|---|
| DEN HAAG | 10-04-1990 | ORTHLIEB CH.E. |